# EUROPÄISCHE PATENTSCHRIFT

(11) **EP 3 065 966 B1**
(45) Veröffentlichungstag und Bekanntmachung des Hinweises auf die Patenterteilung: **16.08.2017**
(21) Anmeldenummer: 14780855.4
(22) Anmeldetag: 06.10.2014
(51) Int. Cl.: B60K 17/08

(54) **ANTRIEBSSTRANG FÜR EIN KRAFTFAHRZEUG**
DRIVE TRAIN FOR A MOTOR VEHICLE
CHAÎNE CINÉMATIQUE POUR VÉHICULE AUTOMATIQUE

(30) Priorität: 06.11.2013 DE 102013222500
(43) Veröffentlichungstag der Anmeldung: 14.09.2016
(73) Patentinhaber: ZF Friedrichshafen AG, 88046 Friedrichshafen (DE)
(72) Erfinder: HUNOLD, Bernard, 88046 Friedrichshafen (DE)
(86) Internationale Anmeldenummer: PCT/EP2014/071281
(87) Internationale Veröffentlichungsnummer: WO 2015/067418

(56) Entgegenhaltungen:
- CH-A- 446 922
- DE-A1- 10 227 418
- DE-A1-102007 003 340
- DE-A1-102008 057 543
- DE-A1-102011 081 760
- DE-T5-112004 000 316
- JP-A- 2002 349 648

## Beschreibung

Die vorliegende Erfindung betrifft einen Antriebsstrang für ein Kraftfahrzeug gemäß dem Oberbegriff des Anspruchs 1 und ein Verfahren zum Betrieb eines erfindungsgemäßen Antriebsstrangs. Aus dem Stand der Technik sind verschiedene Anordnungen für Antriebsstränge bekannt, die in der Regel aus einem Motor, einem angeflanschten Getriebe, zumeist mit mehreren Getriebegruppen, der Gelenkwelle, welche auch Kardanwelle genannt wird, und der Achse mit Achsübersetzung und Differential bestehen. Solch ein Getriebe deckt in der Regel den kompletten Übersetzungsbereich hinsichtlich Drehzahl und Drehmoment ab und ermöglicht durch Drehrichtungsumkehr die Rückwärtsfahrt. Entsprechend muss unter anderem die Gelenkwelle die hohe Drehzahl der obersten Gänge und die hohen Drehmomente der untersten Gänge aushalten und fällt vom Gewicht sehr schwer aus, was sich beim Trend zu kleineren Achsübersetzungen noch stärker auswirkt. Ebenso stützt sich das, besonders in den unteren Gängen, hohe Antriebsmoment an der Getriebe-/Motoreinheit im Fahrzeugrahmen ab. Die Bewegung der Getriebe-/Motoreinheit und die Verwindung des Rahmens verursacht komfortminimierend ein Wanken des Fahrzeuges. Weiterhin müssen die Dämpferelemente der Motor-/Getriebeaufhängung komfortmindernd sehr hart ausgeführt sein.

Es ist bereits bekannt, dass Getriebegruppen separat ausgeführt werden können und räumlich voneinander getrennt angeordnet sein können. Aus der Schrift DE 102 27 418 A1 der Anmelderin ist zum Beispiel ein Antriebsstrang für ein Kraftfahrzeug, insbesondere für ein Mehrzweckfahrzeug, bekannt, welcher mehrere voneinander zumindest teilweise funktionell abhängige Baugruppen enthält, die zumindest teilweise räumlich getrennt angeordnet sind. Dadurch soll ein Antriebsstrang erzeugt werden, der eine optimale Bauraumausnutzung bietet. Zudem soll der Antriebsstrang an unterschiedlichen Fahr- und Belastungszustände anpassbar sein.

DE 11 2004 000 316 T5 offenbart einen Antriebsstrang gemäß dem Oberbegriff des Anspruchs 1.

Aufgabe der vorliegenden Erfindung ist es, einen Antriebsstrang vorzuschlagen, wobei der Antriebsstrang leichter ausgeführt werden kann und die Komfortminderung durch Wanken des Fahrzeugs oder eine harte Ausführung der Dämpferelemente der Motor-/Getriebeaufhängung minimiert wird.

Diese Aufgabe wird gelöst durch einen Antriebsstrang für Kraftfahrzeuge gemäß Patentanspruch 1. Es wird ein Antriebsstrang für ein Kraftfahrzeug, insbesondere für Nutzfahrzeuge, vorgeschlagen, der mehrere Getriebebaugruppen aufweist, mit mindestens einem Hauptgetriebe, mindestens einem Achsgetriebe und mindestens einer Schaltgruppe, wobei die Getriebebaugruppen zumindest teilweise räumlich getrennt voneinander angeordnet sind. Das Hauptgetriebe ist in der Regel am Motor angeflanscht und ist mit einer Gelenkwelle mit einem Achsgetriebe verbunden. Das Hauptgetriebe weist lediglich Vorwärtsgänge auf, wodurch das Hauptgetriebe sehr leicht und kompakt gebaut werden kann und es keiner zusätzlichen Abstützung am Fahrzeugrahmen bedarf. Die Motorlager können damit auch das Hauptgetriebe tragen. Gleichzeitig besitzt die Gelenkwelle nur eine Drehrichtung, was eine Optimierung der Getriebeaufhängung zulässt. Für das Hauptgetriebe kann eine geeignete Ölsorte verwendet werden, die die Schleppmomente reduziert und auch ggf. für eine nasse Lamellenkupplung geeignet ist. Das Achsgetriebe lenkt die Kraft vom Motor bzw. weiteren Bauteilen wie dem Hauptgetriebe auf die Antriebsachsen um und überträgt damit ein Drehmoment auf die Antriebsräder des Fahrzeugs. Das Achsgetriebe kann dabei verschiedene Bauformen und Baugruppen bzw. Bauteile aufweisen.

Die Schaltgruppe ist erfindungsgemäß im Achsgetriebe angeordnet und kann zum Beispiel als Bereichsgruppe ausgeführt sein. Die notwendigen Rückwärtsgänge werden über die Schaltgruppe erzeugt. Damit entfällt die heute übliche Bereichsgruppe im Hauptgetriebe, die hohe Übersetzungen für die unteren Gänge erzeugt, und wird zum Achsgetriebe verlagert. Die Übersetzung der Bereichsgruppe beträgt typischerweise vier bis fünf. Um diesen Faktor reduziert sich damit auch das Drehmoment in der Gelenkwelle, was eine leichtere Ausführung der Gelenkwelle zulässt und gleichzeitig auch zur weiteren Optimierung der Getriebeaufhängung dient, da sich auch die Abstützmomente in der Getriebeaufhängung um den gleichen Faktor verringern, was eine deutlich weichere und damit komfortablere Auslegung der Getriebeaufhängung erlaubt. Die Schaltgruppe kann in Form der Bereichsgruppe als Planetengetriebe ausgeführt sein. Andere Ausführungsformen sind aber möglich. Ebenso kann die Schaltgruppe als ein weiterer Teil des Hauptgetriebes, wie zum Beispiel der Splitgruppe, ausgeführt werden.

Das Achsgetriebe besitzt mindestens eine Eingangsübersetzung, die auch die Umlenkung der längs angeordneten Gelenkwelle zu den quer angeordneten Achswellen realisiert, mindestens ein Differential und mindestens eine Schaltgruppe. Die Eingangsübersetzung kann typischerweise als Kegelverzahnung ausgeführt sein und dient ebenfalls der Anpassung der Gesamtübersetzung am Fahrzeug. Typische Übersetzungen liegen zwischen zwei und vier. Auch hier ist das Moment aufgrund der verschobenen Bereichsgruppe um den Faktor vier bis fünf niedriger, was eine leichtere und kostengünstigere Ausführung der Eingangsübersetzung erlaubt. Das Differential erfährt eine unveränderte Belastung, da es nach der Schaltgruppe vorgesehen ist, welche das Moment wieder um den Faktor vier bis fünf erhöht. Damit sind hier keinerlei Anpassungen notwendig bzw. möglich. Die Schaltgruppe weist mindestens drei Schaltmöglichkeiten auf, was mindestens drei verwendbaren Gängen entspricht, einen Direktgang, einen langsamen Gang und einen Rückwärtsgang zur Drehrichtungsumkehr. Dabei ist es vorteilhaft, wenn bei Ausführung der Schaltgruppe als Planetengetriebe, das Planetengetriebe bei Drehrichtungsumkehr eine größere Übersetzung aufweist als im Gleichlauf, da so ein langsameres Rückwärtsfahren ermöglicht wird.

Die Anforderungen an die Schmierung sind im Achsgetriebe geprägt von der Forderung nach hoher Tragfähigkeit, was durch einen getrennten Ölhaushalt optimal umsetzbar ist. Die hohen Momente und Kräfte in den Gängen hoher Übersetzung stützen sich bevorzugt auf kürzestem Weg direkt an der Achse ab. Damit ist die Rückwirkung auf das Fahrzeug minimiert und das Systemgewicht wird reduziert.

Der Antriebsstrang weist bevorzugt ein Steuergerät zur Steuerung der Getriebe- und Kupplungsfunktionen und Verbindung mit dem Fahrzeugführungsrechner auf. Die Steller im Hauptgetriebe werden bevorzugt direkt angesteuert und die Steller des Achsgetriebes werden bevorzugt direkt oder auch mittels CAN-Signal und zusätzlichem Signalumsetzer am Achsgetriebe angesteuert.

Der Antriebsstrang wird bevorzugt bei automatisierten Getrieben eingesetzt. Er kann sowohl bei Einfach- als auch bei Doppelkupplungsgetrieben zur Anwendung kommen. Dabei sind auch verschiedene Getriebeausführungsformen für das Hauptgetriebe denkbar. Bevorzugt weist der Antriebsstrang zwölf Vorwärtsgänge und sechs Rückwärtsgänge oder sechzehn Vorwärtsgänge und acht Rückwärtsgänge auf.

Zur weiteren Verdeutlichung der Erfindung sind Figuren mit Ausführungsbeispielen beigefügt.
- Fig. 1:: Erfindungsgemäßer Antriebsstrang
- Fig. 2:: Antriebsstrang nach Fig. 1 mit alternativem Hauptgetriebe

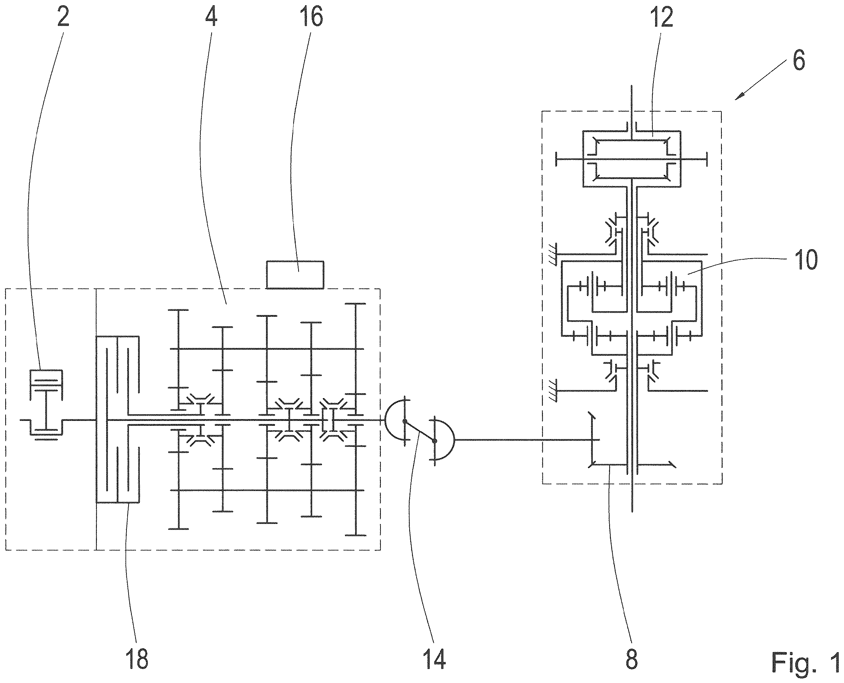

Fig. 1 zeigt einen erfindungsgemäßen Antriebsstrang mit einem Motor 2, einem Hauptgetriebe 4 und einem Achsgetriebe 6. Das Hauptgetriebe 4 ist dabei an den Motor 2 angeflanscht. Das Achsgetriebe 6 weist eine Eingangsübersetzung 8, eine Schaltgruppe 10 und ein Differential 12 auf. Die Eingangsübersetzung 8 ist dabei über eine Gelenkwelle 14 mit dem Hauptgetriebe 4 verbunden. Direkt oder indirekt am Hauptgetriebe ist ein Steuergerät 16 angebracht, welches die Getriebe- und Kupplungsfunktionen steuert und die Verbindung zum Fahrzeugführungsrechner herstellt. Die Steller im Hauptgetriebe 4 werden direkt angesteuert. Die Steller des Achsgetriebes 6 können direkt oder zum Beispiel mittels CAN-Signal und zusätzlichem Signalumsetzer am Achsgetriebe 6 angesteuert werden.

Das Hauptgetriebe 4 ist beispielhaft als Lastschaltgetriebe mit sechs Vorwärtsgängen und einer Doppelkupplung 18 dargestellt. Es besitzt keinen Rückwärtsgang. Die Schaltgruppe 10 ist als Planetengruppe ausgeführt, die mindestens drei Gänge liefert. Die in der Fig. 1 dargestellte Planetengruppe besitzt einen Direktgang als Schnellgang, einen langsamen Gang und einen Rückwärtsgang. Der Direktgang und der langsame Gang bilden zusammen mit den üblichen 5 - 8 Gängen im Hauptgetriebe 10 - 16 Vorwärtsgänge. Die üblichen 5 - 8 Gänge im Hauptgetriebe ergeben ebenso viele Rückwärtsgänge. Der hier gezeigte Antriebsstrang verfügt über zwölf Vorwärtsgänge und sechs Rückwärtsgänge. Die exemplarisch gezeigte Schaltgruppe 10 in Form einer Planetengruppe hat bei geschaltetem Rückwärtsgang und der damit verbundenen Drehrichtungsumkehr eine größere Übersetzung als in den Vorwärtsgängen. Dies ist vorteilhaft, da so ein langsameres Rückwärtsfahren ermöglicht wird.

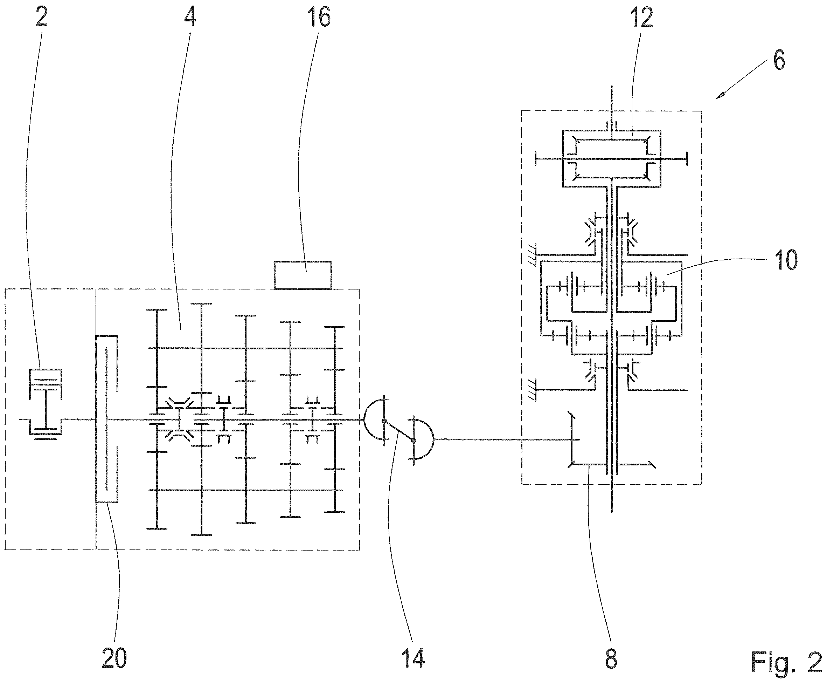

Fig. 2 zeigt eine erfindungsgemäße Ausführung analog zu Fig. 1, in der lediglich ein alternatives Hauptgetriebe 4 eingesetzt wurde. Dies zeigt, dass das beschriebene System auch für automatisierte Getriebe mit Einfachkupplung 20 anwendbar ist. Das hier gezeigte Beispiel hat im Hauptgetriebe 4 acht Vorwärtsgänge, so dass in Kombination mit dem Achsgetriebe 6 und der Schaltgruppe 10 insgesamt sechzehn Vorwärtsgänge und acht Rückwärtsgänge zur Verfügung stehen, wobei die Rückwärtsgänge ebenfalls erst in der Schaltgruppe 10 gebildet werden und das Hauptgetriebe 4 keine Rückwärtsgänge aufweist.

### Bezugszeichen

- 2: Motor
- 4: Hauptgetriebe
- 6: Achsgetriebe
- 8: Eingangsübersetzung
- 10: Schaltgruppe
- 12: Differential
- 14: Gelenkwelle
- 16: Steuergerät
- 18: Doppelkupplung
- 20: Einfachkupplung

## Patentansprüche

1. Antriebsstrang für ein Kraftfahrzeug, insbesondere für Nutzfahrzeuge, mit mehreren Getriebebaugruppen, mit mindestens einem Hauptgetriebe (4), mindestens einem Achsgetriebe (6) und mindestens einer Schaltgruppe (10), die zumindest teilweise räumlich getrennt angeordnet sind, wobei die Schaltgruppe (10) im Achsgetriebe (6) angeordnet ist, wobei das Hauptgetriebe (4) mit einer Gelenkwelle (14) mit dem Achsgetriebe (6) verbunden ist, wobei das Achsgetriebe (6) mindestens eine Eingangsübersetzung (8) besitzt, die auch die Umlenkung der längs angeordneten Gelenkwelle (14) zu quer angeordneten Achswellen realisiert, und wobei das Achsgetriebe mindestens ein Differential (12) und mindestens die eine Schaltgruppe (10) besitzt, **dadurch gekennzeichnet, dass** das Hauptgetriebe (4) lediglich Vorwärtsgänge aufweist, und dass die mindestens eine Schaltgruppe (10) mindestens drei Schaltmöglichkeiten aufweist, einen Direktgang, einen langsamen Gang und einen Rückwärtsgang zur Drehrichtungsumkehr.

2. Antriebsstrang für ein Kraftfahrzeug nach Anspruch 1, **dadurch gekennzeichnet, dass** die mindestens eine Schaltgruppe (10) als Bereichsgruppe ausgeführt ist.

3. Antriebsstrang für ein Kraftfahrzeug nach Anspruch 1 oder 2, **dadurch gekennzeichnet, dass** die mindestens eine Schaltgruppe (10) als Planetengetriebe ausgeführt ist.

4. Antriebsstrang für ein Kraftfahrzeug nach Anspruch 3, **dadurch gekennzeichnet, dass** das Planetengetriebe bei geschaltetem Rückwärtsgang eine größere Übersetzung als in einem der Vorwärtsgänge aufweist.

5. Antriebsstrang für ein Kraftfahrzeug nach einem der vorangehenden Ansprüche, **dadurch gekennzeichnet, dass** der Antriebsstrang ein Steuergerät (16) zur Steuerung von Getriebe- und Kupplungsfunktionen und Verbindung mit einem Fahrzeugführungsrechner aufweist.

6. Antriebsstrang für ein Kraftfahrzeug nach einem der vorangehenden Ansprüche, **dadurch gekennzeichnet, dass** der Antriebsstrang zwölf Vorwärtsgänge und sechs Rückwärtsgänge aufweist.

7. Antriebsstrang für ein Kraftfahrzeug nach einem der vorangehenden Ansprüche, **dadurch gekennzeichnet, dass** der Antriebsstrang sechzehn Vorwärtsgänge und acht Rückwärtsgänge aufweist.

8. Verfahren zum Betreiben eines Antriebsstrangs für ein Kraftfahrzeug nach einem der Ansprüche 1 bis 7, **dadurch gekennzeichnet, dass** im mindestens einen Hauptgetriebe (4) lediglich Vorwärtsgänge erzeugt werden und in der mindestens einen Schaltgruppe (10) mindestens ein Rückwärtsgang erzeugt wird.

## Claims

1. Drive train for a motor vehicle, in particular for commercial vehicles, having a plurality of transmission assemblies, having at least one main transmission (4), at least one axle drive (6) and at least one shifting group (10) which are arranged at least partially spatially separately, the shifting group (10) being arranged in the axle drive (6), the main transmission (4) being connected to the axle drive (6) by way of an articulated shaft (14), the axle drive (6) having at least one input transmission ratio means (8) which also realizes the redirection of the longitudinally arranged articulated shaft (14) to transversely arranged axle shafts, and the axle drive having at least one differential (12) and at least the one shifting group (10), **characterized in that** the main transmission (4) has merely forward gears, and **in that** the at least one shifting group (10) has at least three shifting options: a direct gear, a slow gear and a reverse gear for rotational direction reversal.

2. Drive train for a motor vehicle according to Claim 1, **characterized in that** the at least one shifting group (10) is configured as a range group.

3. Drive train for a motor vehicle according to Claim 1 or 2, **characterized in that** the at least one shifting group (10) is configured as a planetary transmission.

4. Drive train for a motor vehicle according to Claim 3, **characterized in that** the planetary transmission has a greater transmission ratio when a reverse gear is selected than in one of the forward gears.

5. Drive train for a motor vehicle according to one of the preceding claims, **characterized in that** the drive train has a control unit (16) for controlling transmission and clutch functions and for connection to a vehicle management computer.

6. Drive train for a motor vehicle according to one of the preceding claims, **characterized in that** the drive train has twelve forward gears and six reverse gears.

7. Drive train for a motor vehicle according to one of the preceding claims, **characterized in that** the drive train has sixteen forward gears and eight reverse gears.

8. Method for operating a drive train for a motor vehicle according to one of Claims 1 to 7, **characterized in that** merely forward gears are produced in the at least one main transmission (4), and at least one reverse gear is produced in the at least one shifting group (10).

## Revendications

1. Chaîne cinématique pour un véhicule automobile, notamment des véhicules utilitaires, comprenant plusieurs sous-ensembles de transmission, avec au moins une transmission principale (4), au moins une transmission d'essieu (6) et au moins un groupe de changement de rapport (10), lesquels sont disposés en étant au moins partiellement séparés dans l'espace, le groupe de changement de rapport (10) étant disposé dans la transmission d'essieu (6), la transmission principale (4) étant reliée à la transmission d'essieu (6) par un arbre articulé (14), la transmission d'essieu (6) possédant au moins une démultiplication d'entrée (8) qui réalise également le renvoi de l'arbre articulé (14) disposé longitudinalement par rapport à l'axe d'essieu disposé transversalement, et la transmission d'essieu possédant au moins un différentiel (12) et au moins ledit groupe de changement de rapport (10), **caractérisée en ce que** la transmission principale (4) possède uniquement des rapports de marche avant, et **en ce que** l'au moins un groupe de changement de rapport (10) possède au moins trois possibilités de changement de rapport, un rapport à prise directe, un rapport lent et une marche arrière servant à inverser le sens de rotation.

2. Chaîne cinématique pour un véhicule automobile selon la revendication 1, **caractérisée en ce que** l'au moins un groupe de changement de rapport (10) est réalisé sous la forme d'un groupe à zone.

3. Chaîne cinématique pour un véhicule automobile selon la revendication 1 ou 2, **caractérisée en ce que** l'au moins un groupe de changement de rapport (10) est réalisé sous la forme d'un engrenage planétaire.

4. Chaîne cinématique pour un véhicule automobile selon la revendication 3, **caractérisée en ce que** lorsque la marche arrière est engagée, l'engrenage planétaire présente une démultiplication plus élevée que dans l'une des marches avant.

5. Chaîne cinématique pour un véhicule automobile selon l'une des revendications précédentes, **caractérisée en ce que** la chaîne cinématique possède un contrôleur (16) destiné à commander des fonctions de boîte de vitesses et d'embrayage et une liaison avec un ordinateur de contrôle de la conduite.

6. Chaîne cinématique pour un véhicule automobile selon l'une des revendications précédentes, **caractérisée en ce que** la chaîne cinématique possède douze marches avant et six marches arrière.

7. Chaîne cinématique pour un véhicule automobile selon l'une des revendications précédentes, **caractérisée en ce que** la chaîne cinématique possède seize marches avant et huit marches arrière.

8. Procédé pour faire fonctionner une chaîne cinématique pour un véhicule automobile selon l'une des revendications 1 à 7, **caractérisé en ce que** seules des marches avant sont produites dans au moins une transmission principale (4) et au moins une marche arrière est produite dans l'au moins un groupe de changement de rapport (10).
